# FASCICULE DE BREVET EUROPEEN

(11) **EP 3 099 551 B1**
(45) Date de publication et mention de la délivrance du brevet: **20.11.2019**
(21) Numéro de dépôt: 14827794.0
(22) Date de dépôt: 01.12.2014
(51) Int. Cl.: B60W 20/17, B60W 30/20, B60K 6/12, B60W 10/02

(54) **PROCEDE DE LIMITATION DES VIBRATIONS SUR UN VEHICULE HYBRIDE HYDRAULIQUE, PAR L'ENGAGEMENT D'UNE MACHINE HYDRAULIQUE**
VERFAHREN ZUR BEGRENZUNG VON SCHWINGUNGEN BEI EINEM HYDRAULISCHEN HYBRIDFAHRZEUG DURCH DIE BETEILIGUNG EINER HYDRAULISCHEN MASCHINE
METHOD FOR LIMITING VIBRATIONS ON A HYDRAULIC HYBRID VEHICLE, BY THE ENGAGEMENT OF A HYDRAULIC MACHINE

(30) Priorité: 29.01.2014 FR 1450713
(43) Date de publication de la demande: 07.12.2016
(73) Titulaire: Technoboost, 75116 Paris (FR)
(72) Inventeur: BALENGHIEN, Olivier, F-93340 Le Raincy (FR); SIROT, Jean Christian, F-75019 Paris (FR)
(74) Mandataire: Fernandez, Francis Lionel
(86) Numéro de dépôt international: PCT/FR2014/053097
(87) Numéro de publication internationale: WO 2015/114226

(56) Documents cités:
- EP-A1- 2 578 851
- EP-A2- 0 301 590
- FR-A1- 2 970 440
- US-B1- 7 292 932

## Description

La présente invention concerne un procédé de limitation des vibrations sur un véhicule hybride hydraulique, ainsi qu'un véhicule hybride mettant en œuvre un tel procédé.

Le document FR 2 970 440 présente un véhicule hybride hydraulique comportant une transmission reliée à un moteur thermique et à une pompe hydraulique pour entraîner les roues motrices, et à une machine hydraulique présentant une liaison qui peut être engagée pour entraîner directement les roues motrices ou être désengagée, cette transmission comportant des modes de fonctionnement où le moteur thermique ou la pompe sont en marche, et la machine hydraulique est désengagée, lors d'un roulage sur un de ces modes de fonctionnement, la machine hydraulique étant désengagée, il engage cette machine.

Un type de transmission connu pour un véhicule automobile hybride hydraulique, présenté notamment par le document FR-A1-2973302, comporte un train planétaire comprenant une couronne extérieure reliée à un moteur thermique, un pignon planétaire relié à une pompe hydraulique rechargeant des accumulateurs hydrauliques, et un porte-satellites relié par un premier manchon de synchronisation à un différentiel de sortie entraînant les roues motrices.

Le train planétaire comporte un deuxième manchon de synchronisation qui réalise un blocage de ce train quand il est engagé, afin de faire tourner tous ses éléments à la même vitesse.

La transmission comporte de plus une machine hydraulique alimentée par les accumulateurs, pouvant travailler en moteur ou en pompe, qui peut être reliée directement au différentiel de sortie par deux rapports de démultiplication différents, par l'action d'un troisième manchon de synchronisation.

Ce type de transmission permet différents états de fonctionnement en fonction de la demande du conducteur et des conditions de roulage, afin d'obtenir notamment les meilleurs rendements.

Un premier mode de fonctionnement appelé « rapport court » comporte la pompe hydraulique qui est bloquée à l'arrêt, le train planétaire fournissant un rapport de réduction constant de la vitesse du moteur thermique, qui assure les petites et moyennes vitesses du véhicule avec un couple augmenté sur les roues motrices.

Un deuxième mode de fonctionnement appelé « rapport long » comporte les éléments du train planétaire qui sont bloqués ensemble par son manchon de synchronisation, fournissant un rapport de prise directe de la vitesse du moteur thermique, qui assure les moyennes et grandes vitesses du véhicule avec un couple plus faible sur les roues motrices.

Un troisième mode de fonctionnement appelé « dérivation de puissance » comporte un entraînement du porte-satellites et des roues motrices qui lui sont liées, par le moteur thermique suivant un rapport de démultiplication continûment variable qui dépend de la vitesse de la pompe hydraulique liée au pignon planétaire, réalisant en freinant ce pignon planétaire une accélération du véhicule.

Pour ces trois modes de fonctionnement on peut en complément relier la machine hydraulique au différentiel, qui agit alors en parallèle du moteur thermique pour ajouter un couple moteur, ou pour freiner le véhicule en récupérant une énergie qui est stockée dans les accumulateurs.

D'autres modes de fonctionnement comportent notamment un roulage sans émission de gaz polluants « ZEV » ou une marche arrière, comprenant une traction par la machine électrique avec le moteur thermique à l'arrêt.

Par ailleurs, le moteur thermique et la pompe hydraulique sont des machines tournant à des vitesses variables, qui comportent des pulsations de couple entraînant des excitations de la transmission à certains régimes. En particulier pour un moteur thermique à trois cylindres avec un cycle à quatre temps, l'ordre principal est de 1,5, et pour une pompe hydraulique à 7 ou 9 pistons, l'ordre principal est respectivement de 7 et 9.

Suivant le mode de fonctionnement du véhicule hybride et la vitesse de rotation des machines tournantes liées à la transmission, on peut obtenir une concordance entre la fréquence vibratoire donnée par l'ordre principal de ces machines, et la fréquence d'un mode propre d'amplification de la transmission. On excite alors ce mode d'amplification, en générant des bruits et des vibrations transmises au véhicule qui sont désagréables pour les passagers.

Pour limiter ces nuisances, une solution connue consiste à modifier les réglages du moteur thermique afin de réduire son niveau d'excitation vibratoire. Cependant cette modification se fait généralement au détriment de la consommation et des émissions de gaz polluants.

La présente invention a notamment pour but d'éviter ces inconvénients de la technique antérieure.

Elle propose à cet effet un procédé de limitation des vibrations sur un véhicule hybride hydraulique comportant une transmission reliée à un moteur thermique et à une pompe hydraulique pour entraîner les roues motrices, et à une machine hydraulique présentant une liaison qui peut être engagée pour entraîner directement les roues motrices, cette transmission comportant des modes de fonctionnement où le moteur thermique ou la pompe sont en marche, et la machine hydraulique est désengagée, caractérisé en ce que lors d'un roulage sur un de ces modes de fonctionnement, la machine hydraulique étant désengagée, lorsque la vitesse de rotation du moteur thermique ou de la pompe hydraulique s'approche d'un régime qui excite un mode propre d'amplification de la transmission, il engage cette machine.

Un avantage de ce procédé de limitation est que de manière simple et économique, avec seulement des modifications des logiciels de commande de la chaîne de traction, en engageant la machine hydraulique on ajoute une certaine inertie liée à l'arbre de sortie de la transmission, ce qui modifie le mode propre d'amplification de cette transmission.

On peut alors dans le mode de fonctionnement en cours du véhicule, lors d'une variation de vitesse de rotation du moteur thermique ou de la pompe hydraulique, à l'approche du mode propre d'amplification de la transmission, engager la machine hydraulique afin de décaler ce mode, ce qui permet de franchir une plage de vitesse qui aurait contenu le mode propre sans cette modification de l'état de la transmission.

Le procédé de limitation des vibrations selon l'invention peut de plus comporter une ou plusieurs des caractéristiques suivantes, qui peuvent être combinées entre elles.

Selon un mode de réalisation, le procédé met en œuvre pour chaque mode de fonctionnement, une première opération d'identification par des calculs ou des mesures des zones critiques comprenant les modes propres d'amplification de la transmission qui génèrent des bruits.

Ensuite pendant une variation de vitesse du véhicule, le procédé peut mettre en œuvre une deuxième opération de suivi des points de fonctionnement du moteur thermique et de la pompe hydraulique, pour les comparer aux vitesses correspondant aux zones identifiées suivant le mode de fonctionnement utilisé.

Selon un autre mode de réalisation, sur le véhicule en cours de fonctionnement, le procédé met en œuvre une opération de détection d'une amplification modale de la transmission, correspondant à l'arrivée sur une zone critique comprenant un mode propre d'amplification.

Dans ce cas, la détection d'amplification modale peut être réalisée par un capteur de mesure des vibrations ou de mesure de vitesse de rotation.

Avantageusement, le procédé engage la machine hydraulique quand la vitesse du moteur thermique ou de la pompe hydraulique approche d'une valeur prédéterminée la vitesse correspondant au mode propre d'amplification lié au mode de fonctionnement utilisé.

En particulier, la valeur prédéterminée peut être comprise entre environ 10 à 20% de la vitesse correspondant au mode propre d'amplification.

Avantageusement, la transmission du véhicule comprenant un train planétaire présentant ses trois éléments reliés à un moteur thermique, à une pompe hydraulique et aux roues motrices, les modes de fonctionnement comportent un premier mode de fonctionnement rapport court où la pompe est arrêtée, et un deuxième mode rapport long où ce train planétaire est bloqué.

L'invention a aussi pour objet un véhicule automobile hybride hydraulique disposant d'une transmission comprenant un train planétaire présentant ses trois éléments reliés à un moteur thermique, à une pompe hydraulique et aux roues motrices, pour réaliser différents modes de fonctionnement comprenant un mode rapport court avec la pompe à l'arrêt, et un mode rapport long avec le train planétaire bloqué, et comprenant une machine hydraulique présentant une liaison qui peut être engagée pour entraîner directement les roues motrices, ce véhicule comportant des moyens mettant en œuvre un procédé de limitation des vibrations comprenant l'une quelconque des caractéristiques précédentes.

En particulier, le train planétaire peut comporter une couronne reliée au moteur thermique, un pignon planétaire relié à la pompe hydraulique et un porte-satellites relié aux roues motrices.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un graphique présentant en fonction de la vitesse du véhicule et de son mode de fonctionnement, les vitesses de rotation du moteur thermique, et les modes propres d'amplification de la transmission ;
- la figure 2 présente une mise en œuvre du procédé pour éviter une excitation de la transmission en mode de fonctionnement rapport court ;
- la figure 3 présente une mise en œuvre du procédé pour éviter une excitation de la transmission en mode de fonctionnement rapport long ; et
- la figure 4 est un schéma présentant des opérations du procédé selon l'invention.

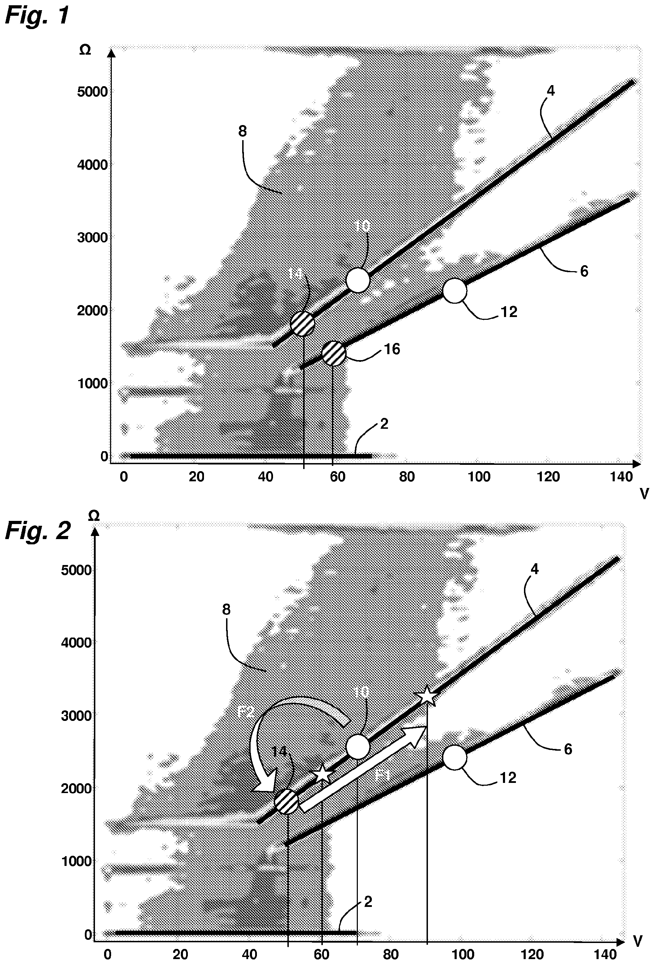

La figure 1 présente en fonction de la vitesse du véhicule V en km/h, des statistiques de vitesse de rotation du moteur thermique Ω exprimées en tr/min, pour un véhicule hybride hydraulique.

Le véhicule hybride comporte une transmission disposant d'un train planétaire présentant une couronne extérieure liée au moteur thermique, un pignon planétaire central lié à une pompe hydraulique à cylindrée variable pouvant travailler en moteur, et un porte-satellites lié aux roues motrices.

On obtient avec cette transmission un mode de fonctionnement rapport court quand la pompe hydraulique est à l'arrêt, un mode de fonctionnement rapport long quand le train planétaire est bloqué, et un mode de fonctionnement en dérivation de puissance donnant une démultiplication variable quand ces deux machines sont en fonctionnement.

La transmission est reliée de plus à une machine hydraulique, appelée par ailleurs moteur hydraulique pouvant travailler en pompe, par une liaison comportant un ou plusieurs rapports de démultiplication, qui peut être engagée pour entraîner directement les roues motrices.

On observe une première forte densité suivant la droite horizontale 2 qui est l'arrêt du moteur thermique, correspondant à un état de fonctionnement sans émission de gaz polluant « ZEV », comprenant une traction du véhicule uniquement par la machine hydraulique.

On observe une deuxième forte densité suivant la droite inclinée 4 correspondant à l'état de fonctionnement rapport court, et une troisième forte densité suivant la droite inclinée 6 présentant une pente plus faible, correspondant à l'état de fonctionnement rapport long.

On observe de plus un nuage de points 8 répartis sur une grande surface, correspondant au mode dérivation utilisant des vitesses du moteur thermique variées.

On a constaté pour cette transmission les modes propres suivants donnés en Hertz, présentés pour la première colonne avec la machine hydraulique désengagée et pour la deuxième colonne avec cette machine engagée :

| | | |
|---|---|---|
| Rapport Long | 59,10 | 37,20 |
| Rapport Court | 65,00 | 48,30 |
| Dérivation | 65,10 | 51,00 |

En fonction des différents rapports internes de la transmission, on a alors pour un moteur thermique à quatre temps comprenant trois cylindres, les vitesses suivantes de ce moteur correspondant aux modes propres ci-dessus, exprimées en tr/min, présentés pour la première colonne avec la machine hydraulique désengagée et pour la deuxième colonne avec cette machine engagée :

| | | |
|---|---|---|
| Rapport Long | 2364,00 | 1488,00 |
| Rapport Court | 2600,00 | 1932,00 |
| Dérivation | 2604,00 | 2040,00 |

On a aussi pour une pompe hydraulique à neuf pistons, les vitesses suivantes de cette pompe correspondant aux modes propres :

| | | |
|---|---|---|
| Rapport Long | 394,00 | 248,00 |
| Rapport Court | 433,33 | 322,00 |
| Dérivation | 434,00 | 340,00 |

On a de même pour une pompe hydraulique à sept pistons, les vitesses suivantes de cette pompe correspondant aux modes propres :

| | | |
|---|---|---|
| Rapport Long | 506,57 | 318,86 |
| Rapport Court | 557,14 | 414,00 |
| Dérivation | 558,00 | 437,14 |

En fonction des démultiplications de la transmission, la figure 1 présente pour des roulages avec la machine hydraulique désengagée, le premier mode propre rapport court 10 qui se trouve à la vitesse du véhicule de 70km/h avec la vitesse du moteur thermique de 2600tr/min, et le premier mode propre rapport long 12 qui se trouve à la vitesse du véhicule de 98km/h avec la vitesse de ce moteur de 2364tr/min.

Cette figure présente aussi pour des roulages avec la machine hydraulique engagée, le deuxième mode propre rapport court 14 qui se trouve à la vitesse du véhicule de 52km/h avec une vitesse du moteur thermique de 1932tr/min, et le deuxième mode propre rapport long 16 qui se trouve à la vitesse du véhicule de 59km/h avec la vitesse de ce moteur de 1488tr/min.

La figure 2 présente un roulage sur le mode de fonctionnement rapport court, la machine hydraulique étant désengagée, avec une accélération du véhicule comme indiqué par la flèche F1. Sans changement de l'état de la transmission, la machine hydraulique restant désengagée, on aurait alors un passage par le premier mode propre rapport court 10 qui causerait une intensification ou amplification des vibrations émises par la transmission, et des vibrations ainsi que des bruits dans l'habitacle.

Dans ce cas à l'approche du premier mode propre rapport court 10, à la vitesse de 60km/h, le procédé engage la liaison de la machine hydraulique, et change le mode propre rapport court qui passe du premier au deuxième mode 14 suivant la flèche F2.

Le véhicule peut ensuite continuer son accélération, pour arriver à la vitesse de 90km/h donnant une vitesse de rotation du moteur thermique suffisamment éloignée de la vitesse critique excitant le premier mode propre rapport court 10. A cette vitesse le procédé désengage la liaison de la machine hydraulique, ce qui permet de réduire les frottements en améliorant la consommation du véhicule, ainsi que de diminuer les bruits et l'usure de cette machine.

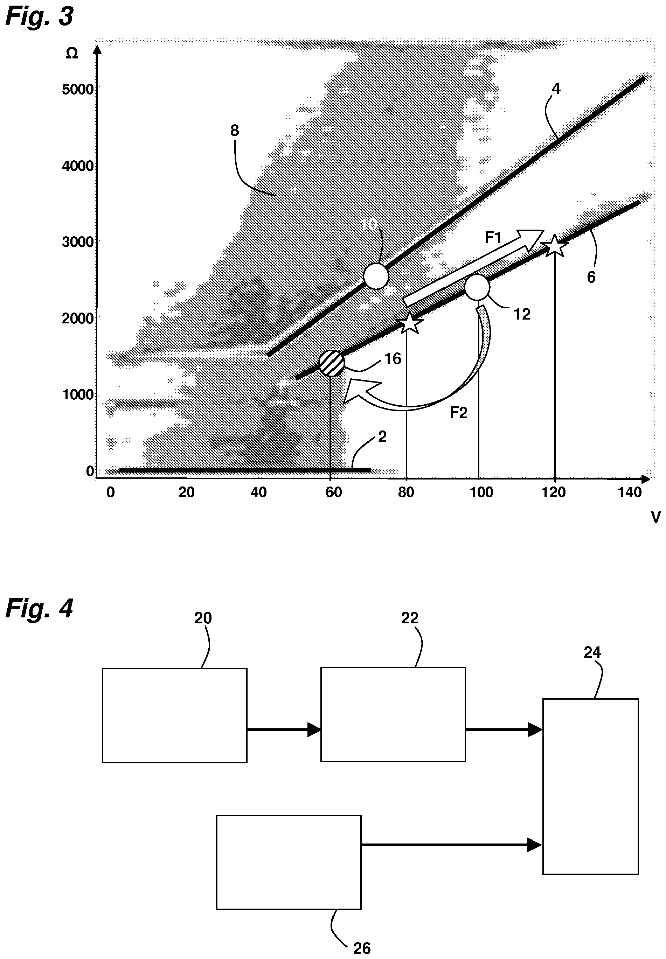

La figure 3 présente un roulage sur le mode de fonctionnement rapport long, la machine hydraulique étant désengagée, avec une accélération du véhicule comme indiqué par la flèche F1. Sans changer l'état de la transmission, on aurait alors un passage par le premier mode propre rapport long 12.

Dans ce cas à l'approche du premier mode propre rapport long 12, à la vitesse de 80km/h, le procédé engage la liaison de la machine hydraulique, et change le mode propre rapport long qui passe du premier au deuxième mode 16 suivant la flèche F2.

Le véhicule peut ensuite continuer son accélération, pour arriver à la vitesse de 120km/h donnant une vitesse de rotation du moteur thermique suffisamment éloignée de la vitesse critique excitant le premier mode propre rapport long 12, où le procédé désengage la liaison de la machine hydraulique.

De la même manière pour un roulage du véhicule avec la pompe hydraulique en marche, notamment pour le mode de fonctionnement en dérivation de puissance, on peut à l'approche des modes propres d'excitation de la transmission engager la machine hydraulique afin de décaler ses modes propres pour passer la plage de vitesse correspondante, et après cette plage la désengager.

On réalise ainsi de manière simple et efficace, sans ajouter de matériel dans la transmission, réduire sur différents modes de fonctionnement les vibrations et les bruits dans le véhicule.

Ce procédé permet d'éviter certains compromis réalisés de manière connue, comprenant une modification des réglages de la combustion du moteur thermique permettant de réduire le niveau d'excitation de ce moteur, afin de l'utiliser à des vitesses correspondant aux modes propres d'amplification de la transmission. Ce type de réglage comporte généralement une dégradation des prestations de consommation et d'émission de gaz polluants.

Pour la pompe hydraulique, on peut éviter des modifications permettant de limiter le niveau d'excitation qu'elle délivre, qui sont généralement coûteuses.

La figure 4 présente deux variantes de mise en œuvre du procédé selon l'invention.

La première variante de mise en œuvre du procédé présente une opération préliminaire 20 comportant pour chaque mode de fonctionnement, l'identification par des calculs ou des mesures des zones comprenant les modes propres d'amplification de la transmission qui génèrent des vibrations et des bruits, et on en déduit les vitesses correspondantes du moteur thermique et de la pompe hydraulique.

Ensuite lors du roulage avec un mode de fonctionnement, notamment le mode rapport court ou rapport long, pendant une variation de vitesse du véhicule, une opération suivante 22 comporte le suivi des points de fonctionnement du moteur thermique ou de la pompe hydraulique, pour les comparer aux vitesses correspondant aux zones identifiées comme critique suivant le mode de fonctionnement utilisé.

La dernière opération 24 comporte dans le cas où la vitesse du moteur thermique ou de la pompe hydraulique approche d'une valeur prédéterminée la vitesse correspondant au mode propre d'amplification modale, indiquant l'entrée dans une zone critique, on change alors l'état de la transmission en engageant la machine hydraulique, ce qui permet de continuer le roulage tout en respectant la volonté du conducteur concernant sa demande d'accélération du véhicule.

Avantageusement la valeur prédéterminée est comprise entre environ 10 à 20% de la vitesse correspondant au mode propre d'amplification. En particulier cette valeur peut être de l'ordre de 15%.

La deuxième variante de mise en œuvre du procédé présente lors du roulage une unique opération 26 de détection d'une amplification d'un mode propre de la transmission, venant des pulsations de couple du moteur thermique ou de la pompe hydraulique.

On peut utiliser pour cette détection un accéléromètre mesurant les vibrations, avec un traitement du signal qui permet en fonction du signal détecté de définir la machine tournante et son mode d'excitation qui est en cause.

On peut en variante utiliser des capteurs de vitesse de rotation, par exemple la vitesse de rotation d'un arbre de transmission, ou d'une roue du véhicule donnée par un capteur de la fonction anti-blocage « ABS », pour mesurer les fluctuations de régime et en déduire les niveaux des acyclismes afin de déterminer les amplifications modales de la chaîne de traction.

On réalise ensuite si nécessaire la dernière opération 24 de changement de l'état de la transmission, en engageant la machine hydraulique.

Les deux variantes de mise en œuvre du procédé utilisant la connaissance des modes propres de la transmission, ou la détection lors du roulage des amplifications modales de la transmission par des capteurs, peuvent être combinées entre elles.

## Revendications

1. Procédé de limitation des vibrations sur un véhicule hybride hydraulique comportant une transmission reliée à un moteur thermique et à une pompe hydraulique pour entraîner les roues motrices, et à une machine hydraulique présentant une liaison qui peut être engagée pour entraîner directement les roues motrices ou être désengagée, cette transmission comportant des modes de fonctionnement (4, 6) où le moteur thermique ou la pompe sont en marche, et la machine hydraulique est désengagée, **caractérisé en ce que** lors d'un roulage sur un de ces modes de fonctionnement (4, 6), la machine hydraulique étant désengagée, lorsque la vitesse de rotation du moteur thermique ou de la pompe hydraulique s'approche d'un régime qui excite un mode propre de résonance de la transmission (10, 12), il engage cette machine.

2. Procédé de limitation des vibrations selon la revendication 1, **caractérisé en ce qu'**il met en œuvre pour chaque mode de fonctionnement (4, 6), une première opération (20) d'identification par des calculs ou des mesures des zones critiques comprenant les modes propres de résonance de la transmission qui génèrent des bruits.

3. Procédé de limitation des vibrations selon la revendication 2, **caractérisé en ce que** pendant une variation de vitesse du véhicule, il met en œuvre une deuxième opération (22) de suivi des points de fonctionnement du moteur thermique et de la pompe hydraulique, pour les comparer aux vitesses correspondant aux zones identifiées suivant le mode de fonctionnement utilisé.

4. Procédé de limitation des vibrations selon l'une quelconque des revendications précédentes, **caractérisé en ce que** sur le véhicule en cours de fonctionnement, il met en œuvre une opération de détection d'une amplification modale de la transmission (26), correspondant à l'arrivée sur une zone critique comprenant un mode propre de résonance (10, 12).

5. Procédé de limitation des vibrations selon la revendication 4, **caractérisé en ce que** la détection d'amplification modale (26) est réalisée par un capteur de mesure des vibrations ou de mesure de vitesse de rotation.

6. Procédé de limitation des vibrations selon l'une quelconque des revendications précédentes, **caractérisé en ce qu'**il engage la machine hydraulique quand la vitesse du moteur thermique ou de la pompe hydraulique approche d'une valeur prédéterminée la vitesse correspondant au mode propre de résonance lié au mode de fonctionnement utilisé.

7. Procédé de limitation des vibrations selon la revendication 6, **caractérisé en ce que** la valeur prédéterminée est comprise entre environ 10 à 20% de la vitesse correspondant au mode propre de résonance.

8. Procédé de limitation des vibrations selon l'une quelconque des revendications précédentes, la transmission du véhicule comprenant un train planétaire présentant ses trois éléments reliés à un moteur thermique, à une pompe hydraulique et aux roues motrices, **caractérisé en ce que** les modes de fonctionnement comportent un premier mode de fonctionnement rapport court (4) où la pompe est arrêtée, et un deuxième mode rapport long (6) où ce train planétaire est bloqué.

9. Véhicule automobile hybride hydraulique disposant d'une transmission comprenant un train planétaire présentant ses trois éléments reliés à un moteur thermique, à une pompe hydraulique et aux roues motrices, pour réaliser différents modes de fonctionnement comprenant un mode rapport court (4) avec la pompe à l'arrêt, et un mode rapport long (6) avec le train planétaire bloqué, et comprenant une machine hydraulique présentant une liaison qui peut être engagée pour entraîner directement les roues motrices ou être désengagée, **caractérisé en ce qu'**il comporte des moyens mettant en œuvre un procédé de limitation des vibrations réalisé selon l'une quelconque des revendications précédentes.

10. Véhicule automobile selon la revendication 9, **caractérisé en ce que** le train planétaire comporte une couronne reliée au moteur thermique, un pignon planétaire relié à la pompe hydraulique et un porte-satellites relié aux roues motrices.

## Patentansprüche

1. Verfahren zur Begrenzung der Schwingungen auf einem hydraulischen Hybridfahrzeug, das ein Getriebe umfasst, das mit einer Brennkraftmaschine und einer Hydraulikpumpe verbunden ist, um die Antriebsräder anzutreiben, und mit einer hydraulischen Maschine, die eine Verbindung aufweist, die eingerückt werden kann, um die Antriebsräder direkt anzutreiben, oder ausgerückt werden kann, wobei dieses Getriebe Betriebsarten (4, 6) umfasst, bei welchen die Brennkraftmaschine oder die Pumpe in Betrieb sind, und die hydraulische Maschine ausgerückt ist, **dadurch gekennzeichnet, dass** bei einem Fahren auf eine dieser Betriebsarten (4, 6) die hydraulische Maschine ausgerückt wird, wenn sich die Drehzahl der Brennkraftmaschine oder der Hydraulikpumpe einer Drehzahl nähert, die eine Eigenresonanzmode des Getriebes (10, 12) erregt, es diese Maschine einrückt.

2. Verfahren zur Begrenzung der Schwingungen nach Anspruch 1, **dadurch gekennzeichnet, dass** es für jede Betriebsart (4, 6) einen ersten Vorgang (20) zur Identifikation durch Berechnungen oder Messungen der kritischen Zonen, die die Eigenresonanzmoden des Getriebes, die Geräusche erzeugen, umfassen, umsetzt.

3. Verfahren zur Begrenzung der Schwingungen nach Anspruch 2, **dadurch gekennzeichnet, dass** es während einer Geschwindigkeitsvariation des Fahrzeugs einen zweiten Verfolgungsvorgang (22) der Betriebspunkte der Brennkraftmaschine und der Hydraulikpumpe umsetzt, um sie mit den Geschwindigkeiten zu vergleichen, die den identifizierten Zonen gemäß dem verwendeten Betriebsmodus entsprechen.

4. Verfahren zur Begrenzung der Schwingungen nach einem der vorstehenden Ansprüche, **dadurch gekennzeichnet, dass** es auf dem Fahrzeug im Laufe des Betriebs einen Erfassungsvorgang einer modalen Verstärkung des Getriebes (26) umsetzt, die der Ankunft auf einer kritischen Zone entspricht, die einer Eigenresonanzmode (10, 12) entspricht.

5. Verfahren zur Begrenzung der Schwingungen nach Anspruch 4, **dadurch gekennzeichnet, dass** die Erfassung modaler Verstärkung (26) von einem Messfühler der Schwingungen oder Drehzahlmessung ausgeführt wird.

6. Verfahren zur Begrenzung der Schwingungen nach einem der vorstehenden Ansprüche, **dadurch gekennzeichnet, dass** es die hydraulische Maschine einrückt, wenn sich die Drehzahl der Brennkraftmaschine oder der Hydraulikpumpe um einen vorbestimmten Wert der Drehzahl nähert, die der Eigenresonanzmode, die mit dem verwendeten Betriebsmodus verbunden ist, entspricht.

7. Verfahren zur Begrenzung der Schwingungen nach Anspruch 6, **dadurch gekennzeichnet, dass** der vorbestimmte Wert zwischen etwa 10 bis 20 % der Drehzahl, die der Eigenresonanzmode entspricht, liegt.

8. Verfahren zur Begrenzung der Schwingungen nach einem der vorstehenden Ansprüche, wobei das Getriebe des Fahrzeugs einen Planetengetriebezug umfasst, der seine drei Elemente mit einer Brennkraftmaschine, einer Hydraulikpumpe und mit den Antriebsrädern verbunden aufweist, **dadurch gekennzeichnet, dass** die Betriebsarten einen ersten Betriebsmodus mit kurzem Gang (4) umfassen, bei dem die Pumpe gestoppt ist, und einen zweiten Modus mit langem Gang (6), bei dem dieser Planetengetriebezug blockiert ist.

9. Hydraulisches Hybridkraftfahrzeug, das über ein Getriebe verfügt, das einen Planetengetriebezug umfasst, der seine drei Elemente mit einer Brennkraftmaschine, einer Hydraulikpumpe und mit den Antriebsrädern verbunden aufweist, um unterschiedliche Betriebsarten auszuführen, die eine Art mit kurzem Gang (4) mit der Pumpe im Stillstand, eine Art mit langem Gang (6) mit dem Planetengetriebezug blockiert umfasst, und eine hydraulische Maschine umfasst, die eine Verbindung aufweist, die eingerückt werden kann, um die Antriebsräder direkt anzutreiben, oder ausgerückt werden kann, **dadurch gekennzeichnet, dass** es Mittel umfasst, die ein Verfahren zur Begrenzung der Schwingungen umsetzen, das nach einem der vorstehenden Ansprüche umgesetzt wird.

10. Kraftfahrzeug nach Anspruch 9, **dadurch gekennzeichnet, dass** der Planetengetriebezug einen Kranz umfasst, der mit der Brennkraftmaschine verbunden ist, ein Planetenrad, das mit der Hydraulikpumpe verbunden ist, und einen Satellitenträger, der mit den Antriebsrädern verbunden ist.

## Claims

1. A method for limiting vibrations on a hydraulic hybrid vehicle comprising a transmission connected to a heat engine and to a hydraulic pump for driving the driving wheels, and to a hydraulic machine having a link which can be engaged for driving the driving wheels directly, or can be disengaged, this transmission comprising operating modes (4, 6) in which the heat engine or the pump are operational, and the hydraulic machine is disengaged, **characterized in that** during driving in one of these operating modes (4, 6), with the hydraulic machine being disengaged, when the speed of rotation of the heat engine or of the hydraulic pump is close to a speed that excites a resonance eigenmode of the transmission (10, 12), it engages this machine.

2. The method for limiting vibrations according to Claim 1, **characterized in that** it implements, for each operating mode (4, 6), a first identification operation (20) by calculations or measurements of the critical zones including the resonance eigenmodes of the transmission which generate noise.

3. The method for limiting vibrations according to Claim 2, **characterized in that** during a variation of speed of the vehicle, it implements a second operation (22) for monitoring the points of operation of the heat engine and of the hydraulic pump, to compare them with the speeds corresponding to the zones identified according to the operating mode which is used.

4. The method for limiting vibrations according to any one of the preceding claims, **characterized in that** on the vehicle during operation, it implements an operation for detection of a modal amplification of the transmission (26), corresponding to the arrival at a critical zone including a resonance eigenmode (10, 12) .

5. The method for limiting vibrations according to Claim 4, **characterized in that** the detection of modal amplification (26) is carried out by a sensor for measurement of the vibrations or for measurement of rotation speed.

6. The method for limiting vibrations according to any one of the preceding claims, **characterized in that** it engages the hydraulic machine when the speed of the heat engine or of the hydraulic pump is close to a predetermined value, the speed corresponding to the resonance eigenmode linked to the operating mode which is used.

7. The method for limiting vibrations according to Claim 6, **characterized in that** the predetermined value is comprised between approximately 10 to 20% of the speed corresponding to the resonance eigenmode.

8. The method for limiting vibrations according to any one of the preceding claims, the transmission of the vehicle including a planetary gear having its three elements connected to a heat engine, to a hydraulic pump and to the driving wheels, **characterized in that** the operating modes comprise a first low ratio operating mode (4) in which the pump is stopped, and a second high ratio mode (6) in which this planetary gear is locked.

9. A hydraulic hybrid motor vehicle having a transmission including a planetary gear having its three elements connected to a heat engine, to a hydraulic pump and to the driving wheels, to realize different operating modes including a low ratio mode (4) with the pump stopped, and a high ratio mode (6) with the planetary gear locked, and including a hydraulic machine having a link which can be engaged for directly driving the driving wheels, or can be disengaged, **characterized in that** it comprises means implementing a method for limiting vibrations realized according to any one of the preceding claims.

10. The motor vehicle according to Claim 9, **characterized in that** the planetary gear comprises a ring gear connected to the heat engine, a sun gear connected to the hydraulic pump and a planetary carrier connected to the driving wheels.
